# EUROPÄISCHE PATENTSCHRIFT

(11) **EP 0 858 955 B1**
(45) Veröffentlichungstag und Bekanntmachung des Hinweises auf die Patenterteilung: **28.07.1999**
(21) Anmeldenummer: 98102153.8
(22) Anmeldetag: 07.02.1998
(51) Int. Cl.: B65D 51/16, F16K 24/06

(54) **Belüftungsventil aus Kunststoff für Behälter**
Plastic venting valve arrangement for containers
Dispositif de soupape d'aération en matière plastique pour récipients

(30) Priorität: 17.02.1997 DE 29702772 U
(43) Veröffentlichungstag der Anmeldung: 19.08.1998
(73) Patentinhaber: PROTECHNA S.A., 1701 Fribourg (CH)
(72) Erfinder: Schütz, Udo, 56242 Selters / Westerwald (DE)
(74) Vertreter: Pürckhauer, Rolf, Dipl.-Ing.

(56) Entgegenhaltungen:
- DE-U- 29 608 342
- FR-A- 1 321 824

## Beschreibung

Die Erfindung betrifft ein Belüftungsventil aus Kunststoff für Behälter zum Transport und zur Lagerung von Flüssigkeiten, das in einen Schraubdeckel oder einen Schraubstopfen zum Verschließen der Füll- und/oder Entleeröffnung und/oder der Be- und/oder Entlüftungsöffnung eines Behälters integriert ist und ein als Gewindestopfen ausgebildetes Ventilgehäuse aufweist, das in ein entsprechendes Gewindeloch des Schraubdeckels oder Gewindestopfens einschraubbar ist und das eine durch eine Ventilmembran zu öffnende und zu schließende Ventilöffnung sowie einen Spritzschutz für die Ventilmembran gegen die im Behälter transportierte und gelagerte Flüssigkeit aufweist.

Aus der DE 296 08 342.9 U1 ist ein Belüftungsventil dieser Gattung bekannt, bei dem die Ventilmembran durch eine Klemmscheibe mit Luftdurchtrittsöffnungen im Ventilgehäuse gehalten ist, die gleichzeitig zum Schutz der Ventilmembran gegen das Eindringen von Flüssigkeit aus dem Behälter in das Ventil bei während des Transportes auftretenden Schwallschwingungen der Flüssigkeit dienen soll. Die Praxis hat gezeigt, daß die Klemmscheibe diese Schutzfunktion nur unzureichend ausübt, da beim Transport Flüssigkeit in das Ventilgehäuse eintreten kann und durch die von der Flüssigkeit ausgeübte Sogwirkung sich die Ventilmembran öffnet und Flüssigkeit über das Belüftungsventil aus dem Behälter austritt. Ein weiterer wesentlicher Nachteil des bekannten Belüftungsventils besteht darin, daß die Ventilmembran nicht die für Transport- und Lagerbehälter für Flüssigkeiten vorgeschriebene Druckfestigkeit bei einem Behälterdruck von 1 bar besitzt.

Die DE 25 01 228 A1 beschreibt eine für Flüssigkeitsbehälter bestimmte, auf einen Spundhals aufschraubbare Verschlußkappe, in die ein als Be- und Entlüftungsventil wirkendes Sicherheitsventil integriert ist, das auf Über- und Unterdruck im Behälter anspricht. Bei diesem Sicherheitsventil kommt eine Ventilscheibe aus elastischem Material zum Einsatz, die beim Einbau stark vorgespannt wird und dabei die Form eines Kugelsegments annimmt. Bei diesem Ventil besteht die Gefahr des Undichtwerdens aufgrund von Ermüdungserscheinungen des Ventilscheibenmaterials bei längerem Einsatz.

Der Erfindung liegt die Aufgabe zugrunde, ein Belüftungsventil der gattungsgemäßen Art zu entwickeln, das höchsten Sicherheitsanforderungen genügt.

Diese Aufgabe ist erfindungsgemäß gelöst durch ein Belüftungsventil mit den Merkmalen des Patentanspruchs 1.

Die Unteransprüche beinhalten vorteilhafte Weiterentwicklungen der Erfindung.

Das erfindungsgemäße Sicherheitsventil zeichnet sich durch höchste Funktionssicherheit aus und erfüllt die vorgeschriebenen Sicherheitslinien.

Die Erfindung ist nachstehend anhand von Zeichnungen erläutert, die folgendes darstellen
- Fig. 1: einen Längsschnitt eines Belüftungsventils und
- Fig. 2: eine Draufsicht des Ventils nach Fig. 1 ohne Siegelkappe.

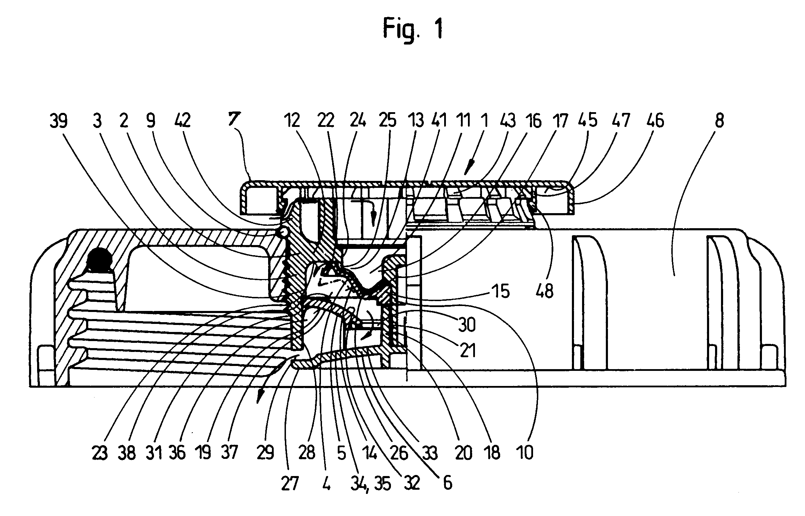

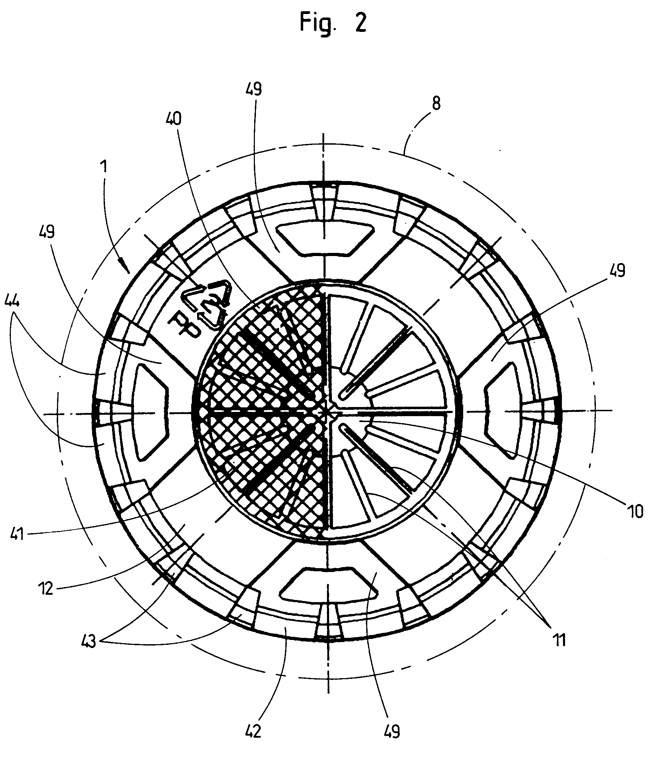

Das aus Kunststoff hergestellte Belüftungsventil 1 nach den Fign. 1 und 2 für Tanks, Fässer, Palettenbehälter und dergleichen Behälter für den Transport und die Lagerung von Flüssigkeiten besteht aus einem als Gewindestopfen 3 ausgebildeten zylindrischen Ventilgehäuse 2, einer Ventilmembran 4, einer Schwallscheibe 5, einem Schwalldeckel 6 und einer Siegelkappe 7.

Der Gewindestopfen 3, der in einen Schraubdeckel 8 aus Kunststoff beispielsweise zum Verschließen der Befüllöffnung des Kunststoff-Innenbehälters eines Palettenbehälters eingeschraubt und in dem Schraubdeckel 8 mittels eines Dichtringes 9 abgedichtet ist, weist eine zentrische Nabe 10 auf, die durch Rippen 11 gehalten ist, die sich von der Nabe 10 sternförmig nach außen zu einer Ringschulter 12 erstrecken. Zwischen den Halterippen 11 sind Luftdurchtrittsöffnungen 13 gebildet.

Die federnd ausgebildete Ventilmembran 4 zum Öffnen und Schließen der Luftdurchtrittsöffnungen 13, die aus einem flexiblen und gegen aggressive Flüssigkeiten widerstandsfähigen Material wie Kunststoff oder Kautschuk mit entsprechenden Zusätzen hergestellt ist, ist als Hutprofil 14 ausgebildet und weist eine zentrale, verstärkte Befestigungsnabe 15 auf. Die Ventilmembran 4 ist mit der Hutprofilöffnung 16 zur Ringschulter 12 des Ventilgehäuses 2 weisend auf die Nabe 10 bis an einen Absatz 17 derselben aufgeschoben.

Die Ventilmembran 4 ist mittels des auf das innere Ende 18 der Nabe 10 aufgepreßten Schwalldeckels 6 auf dieser gehalten. An den gewölbten Schwalldeckel 6 ist eine Klemmhülse 20 mit axialen Klemmstegen 21 angeformt, die die Ventilmembran 4 mit der Befestigungsnabe 15 gegen den Absatz 17 der Nabe 10 des Ventilgehäuses 2 anpreßt, derart, daß die Ventilmembran 4 in der Schließstellung des Ventils 1 mit einem Ringrand 22 unter Vorspannung an der Innenseite 23 der einen Ventilsitz bildenden Ringschulter 12 des Ventilgehäuses 2 anliegt. Die Ventilmembran 4 ist zusätzlich durch einen am Innenrand 24 der Ringschulter 12 angeformten Ringsteg 25 abgestützt.

Die Halterippen 11 der Nabe 10 weisen ein dem Hutprofil 14 der Ventilmembran 4 angepaßtes Profil 26 zum Abstützen der Ventilmembran 4 bei einem Behälterüberdruck auf, der nach den Zulassungsrichtlinien 1 bar nicht überschreiten darf.

Der Außenrand 27 des Schwalldeckels 6 bildet mit dem inneren Ende 28 des Ventilgehäuses 2 einen umlaufenden Durchtrittsschlitz 29 für die bei geöffnetem Ventil 1 in den Behälter eintretende Luft.

Zwischen der Ventilmembran 4 und dem Schwalldeckel 6 ist koaxial zu Membran und Deckel die als Hutprofil 19 ausgebildete Schwallscheibe 5 mit einer mittigen Durchtrittsöffnung 30 für die Luft eingesetzt. Die Schwallscheibe 5 bildet zusammen mit dem Schwalldeckel 6 ein Labyrinth als Schutz für die Ventilmembran 4 gegen in das Ventil 1 eindringende Schwallflüssigkeit. Die Schwallscheibe 5, die mit der Hutprofilöffnung 31 zur Ventilmembran 4 weisend in das Ventilgehäuse 2 eingebaut ist, bildet eine Ablauffläche 32 für in das Ventil 1 eindringende Schwallflüssigkeit.

In gleicher Weise bildet die zur Ventilmembran 4 hin gerichtete Wölbung 33 des Schwalldeckels 6 eine Ablauffläche 34 für in das Belüftungsventil 2 eingetretene Schwallflüssigkeit.

An der Außenseite 35 des Schwalldeckels 6 sind über den Deckelumfang verteilte, axiale Klemmnasen 36 mit dem Hutprofil 19 der Schwallscheibe 5 angepaßten Klemmkanten 37 zum Anpressen der Schwallscheibe 5 gegen einen Absatz 38 auf der Innenseite 39 des Ventilgehäuses 2 angeformt.

An der Außenseite 40 der Ringschulter 12 des Ventilgehäuses 2 ist ein Gitter 41 aus Kunststoff angeschweißt, das die Luftdurchtrittsöffnungen 13 zwischen den Halterippen 11 der Nabe 10 als Schutz gegen das Eindringen von Insekten abdeckt.

An dem an die Ringschulter 12 anschließenden äußeren Rand 42 des Ventilgehäuses 2 sind hakenförmige Haltezähne 43 für die auf diesen festklemmbare Siegelkappe 7 angeformt, wobei zwischen den Haltezähnen 43 und der über diese nach außen vorstehenden Siegelkappe 7 Durchtrittsöffnungen 44 für die bei geöffneter Ventilmembran 4 durch das Belüftungsventil 1 in den Behälter einströmende Luft gebildet sind. An der Innenseite 45 der Siegelkappe 7 ist mit radialem Abstand von deren Außenrand 46 ein Ringsteg 47 mit einer Hinterschneidung 48 angeformt, der beim Aufklemmen der Siegelkappe 7 auf das Ventilgehäuse 2 mit den Haltezähnen 43 desselben verrastet.

Vier Formsegmente 49 an der Außenseite 40 des Ringschalter 12 dienen zum Ansetzen eines Kreuzschlüssel beim Einschrauben und Herausschrauben des Belüftungsventils 1 in den bzw. aus dem Schraubdeckel 8.

Bei Auftreten eines Unterdrucks im Behälter bei der Entnahme von Flüssigkeit öffnet die Ventilmembran 4 des Belüftungsventils 1, so daß Luft über die Luftdurchtrittsöffnungen 44, 13, 30 und 29 in der in Fig. 1 eingezeichneten Pfeilrichtung in den Behälter einströmen kann.

## Patentansprüche

1. Belüftungsventil aus Kunststoff für Behälter zum Transport und zur Lagerung von Flüssigkeiten, das in einen Schraubdeckel oder einem Schraubstopfen zum Verschließen der Füll- und/oder Entleeröffnung und/oder der Be- und/oder Entlüftungsöffnung eines Behälters integriert ist und ein als Gewindestopfen ausgebildetes Ventilgehäuse aufweist, das in ein entsprechendes Gewindeloch des Schraubdeckels oder Gewindestopfens einschraubbar ist und das eine durch eine Ventilmembran zu öffnende und zu schließende Ventilöffnung sowie einen Spritzschutz für die Ventilmembran gegen die im Behälter transportierte und gelagerte Flüssigkeit aufweist, dadurch gekennzeichnet, daß das zylindrische Ventilgehäuse (2) eine zentrische, durch Rippen (11) gehaltene Nabe (10) aufweist, wobei sich die Rippen (11) von der Nabe (10) sternförmig nach außen zu einer Ringschulter (12) erstrecken und zwischen den Rippen (11) Luftdurchtrittsöffnungen (13) gebildet sind, ferner eine federnd ausgebildete Ventilmembran (4) zum Öffnen und Schließen der Luftdurchtrittsöffnungen (13) zwischen den Rippen (11) von innen auf die Nahe (10) bis an einen Absatz (17) derselben aufgeschoben ist, wobei die als Hutprofil (14) ausgebildete Ventilmembran (4) mit der Hutprofilöffnung (16) zur Ringschulter (12) des Ventilgehäuses (2) gerichtet in dieses eingebaut ist und in der Schließstellung des Ventils (1) mit einem Ringrand (22) unter Vorspannung an der Innenseite (23) der einen Ventilsitz bildenden Ringschulter (12) des Ventilgehäuses (2) anliegt, daß auf das innere Ende (18) der Nabe (10) ein Schwalldeckel (6) aufgepreßt ist, dessen Außenrand (27) mit dem inneren Ende (28) des Ventilgehäuses (2) einen umlaufenden Durchtrittsschlitz (29) für die bei geöffnetem Ventil (1) in den Behälter eintretende Luft bildet und der gleichzeitig zur Befestigung der Ventilmembran (4) auf der Nabe (10) dient, daß zwischen der Ventilmembran (4) und dem Schwalldeckel (6) koaxial zu Membran und Deckel in das Ventilgehäuse (2) eine Schwallscheibe (5) mit mindestens einer Durchtrittsöffnung (30) für die Luft eingesetzt ist, die zusammen mit dem Schwalldeckel (6) ein Labyrinth als Schutz für die Ventilmembran (4) gegen in das Ventil (1) eindringende Schwallflüssigkeit bildet, und daß an dem an die Ringschulter (12) anschließenden äußeren Rand (42) des Ventilgehäuses (2) Haltesegmente (Haltezähne 43) für eine auf diesen festklemmbare Siegelkappe (7) angeformt sind, wobei zwischen den Haltesegmenten (Haltezähne 43) und der über diese nach außen vorstehenden Siegelkappe (7) Durchtrittsöffnungen (44) für die bei geöffneter Ventilmembran (4) durch das Belüftungsventil (1) in den Behälter einströmende Luft gebildet sind.

2. Belüftungsventil nach Anspruch 1, dadurch gekennzeichnet, daß die Halterippen (11) der Nabe (10) ein dem Hutprofil (14) der Ventilmembran (4) angepaßtes Profil (26) zum Abstützen der Ventilmembran (4) bei einem Behälterüberdruck aufweisen.

3. Belüftungsventil nach Anspruch 2, dadurch gekennzeichnet, daß die Ventilmembran (4) zusätzlich durch einen am Innenrand (24) der Ringschulter (12) des Ventilgehäuses (2) angeformten Ringsteg (25) abgestützt ist.

4. Belüftungsventil nach einem der Ansprüche 1 bis 3, dadurch gekennzeichnet, daß die aus einem flexiblen und gegen aggressive Flüssigkeiten widerstandsfähigen Material wie Kunststoff oder Kautschuk mit entsprechenden Zusätzen hergestellte Ventilmembran (4) eine zentrale, verstärkte Befestigungsnabe (15) aufweist.

5. Belüftungsventil nach einem der Ansprüche 1 bis 4, dadurch gekennzeichnet, daß an den gewölbten Schwalldeckel (19) eine Klemmhülse (20) mit axialen Klemmstegen (21) angeformt ist, die die Ventilmembran (4) mit der Befestigungsnabe (15) gegen den Absatz (17) der Nabe (10) des Ventilgehäuses (2) anpreßt, und daß die zur Ventilmembran (4) hin gerichtete Wölbung (33) des Schwalldeckels (6) eine Ablauffläche (34) für in das Belüftungsventil (1) eingetretene Schwallflüssigkeit bildet.

6. Belüftungsventil nach einem der Ansprüche 1 bis 5, dadurch gekennzeichnet, daß die Schwallscheibe (5) ein Hutprofil (19) mit einer mittigen Durchtrittsöffnung (30) für die Luft aufweist.

7. Belüftungsventil nach einem der Ansprüche 1 bis 6, gekennzeichnet durch an der Außenseite (35) des Schwalldeckels (6) angeformte, über den Deckelumfang verteilte, axiale Klemmnasen (36) mit dem Hutprofil (19) der Schwallscheibe (5) angepaßten Klemmkanten (37) zum Anpressen der Schwallscheibe (5) gegen einen Absatz (38) auf der Innenseite (39) des Ventilgehäuses (2).

8. Belüftungsventil nach einem der Ansprüche 1 bis 7, dadurch gekennzeichnet, daß die Schwallscheibe (5) mit der Hutprofilöffnung (31) zur Ventilmembran (4) weisend in das Ventilgehäuse (2) eingebaut ist und eine Ablauffläche (32) für in das Ventil (1) eindringende Schwallflüssigkeit bildet.

9. Belüftungsventil nach einem der Ansprüche 1 bis 8, gekennzeichnet durch ein an der Außenseite (40) der Ringschulter (12) des Ventilgehäuses (2) angebrachtes Gitter (41) vorzugsweise aus Kunststoff, das die Luftdurchtrittsöffnungen (13) zwischen den Halterippen (11) der Nabe (10) als Schutz gegen das Eindringen von Insekten abdeckt.

10. Belüftungsventil nach Anspruch 9, dadurch gekennzeichnet, daß das Gitter (41) an der Außenseite (40) der Ringschulter (12) angeschweißt ist.

11. Belüftungsventil nach einem der Ansprüche 1 bis 10, gekennzeichnet durch an dem äußeren Rand (42) des Ventilgehäuses (2) angeformte, hakenförmige Haltezähne (7) zum Festklemmen der Siegelkappe (7) an deren Innenseite (45) mit radialem Abstand vom Außenrand (46) ein Ringsteg (47) mit einer Hinterschneidung (48) angeformt ist, der beim Aufklemmen der Siegelkappe (7) auf das Ventilgehäuse (2) mit den Haltezähnen (43) desselben verrastet.

## Claims

1. Plastic venting valve for containers for transporting and storing liquids, which is integrated into a screw cover or a screw stopper for closing the filling and/or emptying aperture and/or the air supply and/or drain aperture of a container, and has a valve housing configured as a threaded stopper which may be screwed into a corresponding threaded hole of the screw cover or threaded stopper and which has a valve opening to be opened and closed by a valve diaphragm as well as a splashguard for the valve diaphragm to protect it from the liquid transported and stored in the container, **characterised in that** the cylindrical valve housing (2) has a central boss (10) held by ribs (11), the ribs (11) extending from the boss (10) in a star shape outwards to a ring shoulder (12), and air passage openings (13) being formed between the ribs (11), further a valve diaphragm (4), designed resilient, for opening and closing the air passage openings (13) between the ribs (11) from the inside is pushed onto the boss (10) as far as a shoulder (17) of same, the valve membrane (4) configured as a cap profile (14) being fitted with the cap profile aperture (16) directed towards the annular shoulder (12) of the valve housing (2) into said housing and, in the closed position of the valve (1), lying with an annular edge (22) pre-tensioned against the inner side (23) of the annular shoulder (12), forming a valve seat, of the valve housing (2), in that a surge cover (6) is pressed onto the inner end (18) of the boss (10), the outer edge (27) of which cover forms with the inner end (28) of the valve housing (2) a peripheral passage slot (29) for the air entering the container when the valve (1) is opened, and which simultaneously serves to attach the valve diaphragm (4) to the boss (10), in that there is inserted between the valve diaphragm (4) and the surge cover (6), coaxially with the diaphragm and the cover, into the valve housing (2) a surge disc (5) with at least one passage aperture (30) for the air, which, together with the surge cover (6), forms a labyrinth as protection for the valve diaphragm (4) against surging liquid penetrating the valve (1), and in that there are moulded onto the outer edge (42), adjoining the annular shoulder (12), of the valve housing (2), holding segments (holding teeth 43), for a sealing cap (7) which may be clamped securely onto same, there being formed between the holding segments (holding teeth 43) and the sealing cap (7) protruding outwards above these segments, passage apertures (44) for the air streaming into the container through the venting valve (1) when the valve diaphragm (4) is open.

2. Venting valve according to claim 1, **characterised in that** the holding ribs (11) of the boss (10) have a profile (26) adapted to the cap profile (14) of the valve diaphragm (4) to support the valve diaphragm (4) when there is excess pressure in the container.

3. Venting valve according to claim 2, **characterised in that** the valve diaphragm (4) is additionally supported by an annular web (25) moulded onto the inner edge (24) of the annular shoulder (12) of the valve housing (2).

4. Venting valve according to one of claims 1 - 3, **characterised in that** the valve diaphragm (4) manufactured from a material which is flexible and resistant to aggressive liquids, such as plastics or rubber with corresponding additives, has a central, reinforced fastening boss (15)

5. Venting valve according to one of claims 1 - 4, **characterised in that** there is moulded onto the curved surge cover (19) a clamping sleeve (20) with axial clamping webs (21) which presses the valve diaphragm (4) with the fastening boss (15) against the shoulder (17) of the boss (10) of the valve housing (2), and in that the curvature (33), directed towards the valve diaphragm (4), of the surge cover (6) forms a draining surface (34) for surging liquid which has penetrated the venting valve (1).

6. Venting valve according to one of claims 1 - 5, **characterised in that** the surge disc (5) has a cap profile (19) with a central passage aperture (30) for the air.

7. Venting valve according to one of claims 1 - 6, **characterised by** axial clamping noses (36), moulded onto the outer side (35) of the surge cover (6) and distributed over the circumference of the cover, with clamping edges (37) adapted to the cap profile (19) of the surge disc (5) for pressing the surge disc (5) against a shoulder (38) on the inner side (39) of the valve housing (2).

8. Venting valve according to one of claims 1 - 7, **characterised in that** the surge disc (5) is, with the cap profile aperture (31), fitted pointing towards the valve diaphragm (4) into the valve housing (2), and forms a draining surface (32) for surging liquid penetrating the valve (1).

9. Venting valve according to one of claims 1 - 8, **characterised by** a grid (41), preferably made of plastics, attached to the outer side (40) of the annular shoulder (12) of the valve housing (2), which grid covers the air passage openings (13) between the holding ribs (11) of the boss (10) as protection against the intrusion of insects.

10. Venting valve according to claim 9, **characterised in that** the grid (41) is welded onto the outer side (40) of the annular shoulder (12).

11. Venting valve according to one of claims 1 - 10, **characterised by** hook-shaped holding teeth (7), moulded onto the outer edge (42) of the valve housing (2), to clamp securely the sealing cap (7), on the inner side (45) of which, at a radial spacing from the outer edge (46), there is moulded an annular web (47) with an undercut (48), which, when the sealing cap (7) is clamped onto the valve housing (2), locks together with the holding teeth (43) of same.

## Revendications

1. Soupape d'aération en matière plastique pour récipients servant au transport et au stockage de liquides, qui est intégrée à un couvercle vissable ou à un bouchon vissable servant à fermer l'ouverture de remplissage et/ou de vidange et/ou l'ouverture d'entrée et/ou de sortie d'air d'un récipient et qui comporte un corps de soupape, réalisé en bouchon fileté, qui peut être vissé dans un trou taraudé correspondant du couvercle vissable ou du bouchon vissable et qui comporte une ouverture de soupape s'ouvrant et se fermant par une membrane de soupape, ainsi qu'une protection pour la membrane de soupape à l'encontre du liquide transporté et stocké dans le récipient, caractérisée en ce que le corps de soupape cylindrique comporte un moyeu (10) centré, maintenu par des nervures (11), les nervures (11) s'étendant en étoile du moyeu (10) vers l'extérieur, vers un épaulement (12) annulaire et des ouvertures (13) de passage d'air étant ménagés entre les nervures (11), de plus une membrane (4) de soupape, réalisée de manière élastique, servant à ouvrir et à fermer les ouvertures (13) de passage d'air, étant enfilée entre les nervures (11), de l'intérieur, sur le moyeu (10) jusqu'à une partie (17) en retrait de celui-ci, la membrane (4) de soupape réalisée en pièce (14) profilée en chapeau étant montée dans le corps (2) de soupape avec l'ouverture (16) de profil en chapeau dirigé vers l'épaulement (12) annulaire du corps (2) de soupape et s'appliquant, en la position de fermeture de la soupape (1), par un bord (22) annulaire, avec précontrainte, à la face (23) intérieure de l'épaulement (12) annulaire, formant un siège de soupape, du corps (2) de soupape, en ce qu'il est emmanché sur l'extrémité (18) intérieure du moyeu (10) un couvercle (6) anti-vague dont le bord (27) extérieur forme avec l'extrémité (28) intérieure du corps (2) de soupape, une fente (29) de passage entourant pour l'air entrant dans le récipient lorsque la soupape (1) est ouverte et qui sert en même temps à la fixation de la membrane (4) de soupape au moyeu (10), en ce qu'il est introduit entre la membrane (4) de soupape et le couvercle (6) anti-vague, coaxialement à la menbrane et au couvercle, dans le corps (2) de soupape, un disque (5) anti-vague qui comporte au moins une ouverture (30) de passage pour l'air et qui forme conjointement avec le couvercle (6) anti-vague, un labyrinthe servant de protection à la membrane (4) de soupape à l'encontre de liquide en vague pénétrant dans la soupape (1), et en ce qu'il issu du bord (42) extérieur du corps (2) de soupape faisant suite à l'épaulement (12) annulaire des segments de maintien (dents 43 de maintien) pour un capuchon (7) scellé pouvant être fixé sur celui-ci, des ouvertures de passage pour de l'air affluent dans le récipient par la soupape 1 d'aération lorsque la membrane (4) de soupape est ouverte étant ménagées entre les segments de maintien (dents 43 de maintien) et le capuchon (7) scellé en saillie vers l'extérieur au-dessus de ceux-ci.

2. Soupape d'aération suivant la revendication 1, caractérisé en ce que les nervures (11) de maintien du moyeu (10) ont un profil (26) adapté au profil (14) en chapeau de la membrane (14) de soupape, pour soutenir la membrane (4) de soupape en cas de surpression dans le récipient.

3. Soupape d'aération suivant la revendication 2, caractérisée en ce que la membrane (4) de soupape est soutenue de plus par une barrette (25) annulaire issue du bord (24) intérieur de l'épaulement (12) annulaire du corps (2) de soupape.

4. Soupape d'aération suivant l'une des revendications 1 à 3, caractérisée en ce que la membrane (4) de soupape, fabriquée en un matériau souple et résistant aux liquides agressifs, comme de la matière plastique ou du caoutchouc ayant des additifs appropriés, comporte un moyeu (15) de fixation centrale renforcée.

5. Soupape d'aération suivant l'une des revendications 1 à 4, caractérisée en ce qu'il est issu du couvercle (19) anti-vague bombé, une douille (20) de serrage à barrette (21) de serrage axiale, qui presse la membrane (4) de soupape comportant le moyeu (15) de fixation sur la partie (17) en retrait du moyeu (10) du corps (2) de soupape et en ce que le bombement (33) du couvercle (6) anti-vague dirigé vers la membrane (4) de soupape forme une surface (34) d'écoulement pour du liquide en vague entré dans la soupape (1) d'aération.

6. Soupape d'aération suivant l'une des revendications 1 à 5, caractérisée en ce que le disque (5) anti-vague comporte un profil (19) en chapeau ayant une ouverture (30) de passage central pour l'air.

7. Soupape d'aération suivant l'une des revendications 1 à 6, caractérisée par des ergots (36) de serrage axiaux, issus de la face (35) extérieure du couvercle (6) anti-vague, répartis sur le pourtour du couvercle et comportant des arêtes (36) de serrage adaptés au profil (19) en chapeau du disque (5) anti-vague, pour serrer le disque (5) anti-vague sur une partie (38) en retrait ménagée sur la face (39) intérieure du corps(2) de soupape.

8. Soupape d'aération suivant l'une des revendications 1 à 7, caractérisée en ce que le disque (5) anti-vague est monté dans le corps (2) de soupape en ayant l'ouverture (31) de profil en chapeau tourné vers la membrane (4) de soupape et forme une surface (32) d'écoulement pour du liquide en vague entrant dans la soupape (1).

9. Soupape d'aération suivant l'une des revendications 1 à 8, caractérisée par une grille (41), de préférence en matière plastique, qui est montée sur la face (40) extérieure de l'épaulement (12) annulaire du corps (2) de soupape et qui recouvre les ouvertures (13) de passage d'air entre les nervures (11) de maintien du moyeu (10), comme protection contre l'entrée d'insectes.

10. Soupape d'aération suivant la revendication 9, caractérisée en ce que la grille (41) est soudée à la face (40) extérieure de l'épaulement (12) annulaire.

11. Soupape d'aération suivant l'une des revendications 1 à 10, caractérisée par des dents (7) de maintien en forme de crochet issues du bord (42) extérieure du corps (2) de soupape et servant à fixer le capuchon (7) scellé de la face (45) intérieure duquel est issue à distance radiale du bord (46) extérieure, une barrette (46) annulaire à contre-dépouille (48) qui, lorsque l'on sert le capuchon (7) scellé sur le corps (2) de soupape, s'encliquette avec les dents (43) de maintien de celui-ci.
